# EUROPEAN PATENT APPLICATION

(11) **EP 4 442 535 A1**
(43) Date of publication of application: **09.10.2024**
(21) Application number: 22900852.9
(22) Date of filing: 27.07.2022
(51) Int. Cl.: B61L 27/12, G06Q 50/30

(54) **OPERATION PLAN CREATION SYSTEM, OPERATION PLAN CREATION METHOD, OPERATION PLAN CREATION PROGRAM, AND TRANSPORTATION PLAN SYSTEM**

(30) Priority: 02.12.2021 JP 2021196493
(71) Applicant: Hitachi, Ltd., Tokyo 100-8280 (JP)
(72) Inventor: MAEKAWA, Yuki, Tokyo 100-8280 (JP); UEDA, Shunsuke, Tokyo 100-8280 (JP)
(74) Representative: MERH-IP Matias Erny Reichl Hoffmann Patentanwälte PartG mbB
(86) International application number: PCT/JP2022/029023
(87) International publication number: WO 2023/100417

(57) **Abstract**

An timetable plan creation system 100 includes: a storage device 101 that stores information regarding a constraint that is generated in each of timetable variables of an timetable plan and regarding the intensity of the constraint, information that associates a creation algorithm of the timetable plan and a measure of an evaluation index improved by a timetable variables of the timetable plan and by the creation algorithm, and information on desired change of the intensity of the constraint; and a computing device 104 that generates a constraint that has an intensity and that is generated for each of the timetable variables of the timetable plan, and that selects a plan creation algorithm for improving the quality of the timetable plan, and that creates a new timetable plan by executing each of selected plan creation algorithms to which the generated constraint is applied.

## Description

### TECHNICAL FIELD

The present invention relates to a timetable plan creation system, a timetable plan creation method, a timetable plan creation program, and a transportation plan system.

### BACKGROUND ART

In transportation businesses such as railways and buses, vehicles are operated based on a predetermined timetable plan, and transport passengers to their destinations. Such an timetable plan exists on a daily basis and includes a daily timetable and an operation plan of resources (vehicles and crew members). In addition, the timetable plan includes various variables such as the number of trains, train stop durations, train pass/stop classifications, work duty of resources, and routes. As a conventional technique relating to creation of the timetable plan described above or the like, for example, there has been proposed a timetable planning system (see Patent Literature 1) that creates a high-quality operation timetable even when it has complex constituent variables.

This technique relates to a system including: a storage device; and a computing device, the storage device storing evaluation index improvement degree information that stores relations between a change of each of constituent variables of an operation timetable on one hand and a change in quality of the operation timetable resulting from the change of each of the constituent variables in terms of each of operation timetable viewpoints on the other hand, the computing device performing a changeable timetable variable selection process of selecting the operation timetable constituent variable that most improves the quality of the operation timetable, in reference to the evaluation index improvement degree information, an optimization model selection process of selecting, from among a plurality of timetable generating models each capable of generating the operation timetable, the timetable generating model that most improves the quality of the whole operation timetable through the change of the selected constituent variable, and a timetable optimization process of generating a new operation timetable based on the selected timetable generating model.

### [Citation List]

### [Patent Literatures]

Patent Literature 1: Japanese Unexamined Patent Application Publication No. 2021-88205

### SUMMARY OF INVENTION

### Technical Problem

The quality of the timetable plan tends to be directly linked to passenger's evaluation. For this reason, the timetable-plan creation work is important for a railway operator. However, because the work is time- and labor-intensive, it is becoming difficult to maintain and improve the quality. For example, currently, manually collecting and analyzing evidence from questionnaires collected from the passenger, daily work reports of crew members, on-site surveys, etc., points that needs improvement are identified based thereon, considering the details of timetable revisions based on the results.

In addition to the heavy burden of this work itself, coordination among various departments within the railway operator (e.g., head office and station office sites) is essential, and there are many hurdles to overcome in order to finally determine a viable timetable plan. In addition, as railway networks become more complex, and the needs of the passenger become more diverse, it is difficult for even a veteran skilled in the timetable planning to comprehensively consider information by hand alone.

In addition, when using existing planning technology in the work concerned, even if evaluation indexes to be improved have been determined, there is a problem that it is difficult to make an appropriate choice, such as which variables should be updated or what planning technology should be combined.

In addition, when there is a sudden change in demand for the passenger due to policy, etc., there are cases where the timetable plan is frequently updated to meet the travel demand. In this case, depending on the proximity of the execution date and the creation date of the timetable plan, resource constraints tend to become strong, making it difficult to update the plan.

In this regard, an aspect of the present invention is to provide technology that makes it possible to efficiently respond to a daily environmental change in the timetable-plan creation work and to create an appropriate timetable plan.

### Solution to Problem

An timetable plan creation system according to the present invention for solving the problem described above including: a storage device that stores first information that contains information regarding a constraint and an intensity of the constraint, the constraint being generated in each of timetable variables that constitute an timetable plan of a transport service, second information that contains a creation algorithm for creating the timetable plan, third information that contains information for associating a timetable variable of the timetable plan and a measure of an evaluation index of the timetable plan, the timetable variable being one to be updated by the creation algorithm, the evaluation index being one to be improved by executing the creation algorithm, and fourth information that contains information on a desired change of the intensity of the constraint of the first information; and a computing device that executes a constraint generation process for generating a constraint with an intensity, based on the first information and the fourth information, the constraint being one generated for each of the timetable variable of a to-be-created timetable plan, an algorithm selection process for selecting a plan creation algorithm based on the third information, the plan creation algorithm being one for improving a quality of the to-be-created timetable plan, and a plan creation process for creating a new timetable plan by executing each of the plan creation algorithm that has been selected in the algorithm selection process, in the executing, the constraint that has been generated in the constraint generation process being applied to each of the plan creation algorithm. In addition, an timetable plan creation method according to the present invention, including: causing the information processing system to have a storage device, the storage device storing first information that contains information regarding a constraint and an intensity of the constraint, the constraint being generated in each of timetable variables that constitute an timetable plan of a transport service, second information that contains a creation algorithm for creating the timetable plan, third information that contains information for associating a timetable variable of the timetable plan and a measure of an evaluation index of the timetable plan, the timetable variable being one to be updated by the creation algorithm, the evaluation index being one to be improved by executing the creation algorithm, and fourth information that contains information on a desired change of the intensity of the constraint of the first information; and causing the information processing system to execute: a constraint generation process for generating a constraint with an intensity, based on the first information and the fourth information, the constraint being one generated for each of the timetable variable of a to-be-created timetable plan, an algorithm selection process for selecting a plan creation algorithm based on the third information, the plan creation algorithm being one for improving a quality of the to-be-created timetable plan; and a plan creation process for creating a new timetable plan by executing each of the plan creation algorithm that has been selected in the algorithm selection process, in the executing, the constraint that has been generated in the constraint generation process being applied to each of the plan creation algorithm.

In addition, an timetable plan creation program according to the present invention causes an information processing system to execute a step, the information processing system having a storage device that stores first information that contains information regarding a constraint and an intensity of the constraint, the constraint being generated in each of timetable variables that constitute an timetable plan of a transport service, second information that contains a creation algorithm for creating the timetable plan, third information that contains information for associating a timetable variable of the timetable plan and a measure of an evaluation index of the timetable plan, the timetable variable being one to be updated by the creation algorithm, the evaluation index being one to be improved by executing the creation algorithm, and fourth information that contains information on a desired change of the intensity of the constraint of the first information, and the information processing system being caused to execute: a constraint generation process for generating a constraint with an intensity, based on the first information and the fourth information, the constraint being one generated for each of the timetable variable of a to-be-created timetable plan, an algorithm selection process for selecting a plan creation algorithm based on the third information, the plan creation algorithm being one for improving a quality of the to-be-created timetable plan; and a plan creation process for creating a new timetable plan by executing each of the plan creation algorithm that has been selected in the algorithm selection process, in the executing, the constraint that has been generated in the constraint generation process being applied to each of the plan creation algorithm.

In addition, a transportation plan system according to the present invention, including: an timetable plan creation system including a storage device that stores first information that contains information regarding a constraint and an intensity of the constraint, the constraint being generated in each of timetable variables that constitute an timetable plan of a transport service, second information that contains a creation algorithm for creating the timetable plan, third information that contains information for associating a timetable variable of the timetable plan and a measure of an evaluation index of the timetable plan, the timetable variable being one to be updated by the creation algorithm, the evaluation index being one to be improved by executing the creation algorithm, and fourth information that contains information on a desired change of the intensity of the constraint of the first information, and a computing device that executes a constraint generation process for generating a constraint with an intensity, based on the first information and the fourth information, the constraint being one generated for each of the timetable variable of a to-be-created timetable plan, an algorithm selection process for selecting a plan creation algorithm based on the third information, the plan creation algorithm being one for improving a quality of the to-be-created timetable plan, and a plan creation process for creating a new timetable plan by executing each of the plan creation algorithm that has been selected in the algorithm selection process, in the executing, the constraint that has been generated in the constraint generation process being applied to each of the plan creation algorithm; a traffic control system that acquires the timetable plan from the timetable plan creation system, and that controls an operation of a mobile resource in the transport service, based on the timetable plan; and a resource management system that acquires the timetable plan and the fourth information from the timetable plan creation system, and that performs management of the mobile resource in the transport service, based on the timetable plan and the fourth information.

### Advantageous Effects of Invention

According to the present invention, it is possible to efficiently respond to a daily environmental change in the timetable-plan creation work and to create an appropriate timetable plan.

### BRIEF DESCRIPTION OF DRAWINGS

FIG. 1 is a diagram illustrating a configuration example of a transportation plan system according to the present embodiment.
FIG. 2 is a diagram illustrating a configuration example of an timetable plan creation system according to the present embodiment.
FIG. 3A is a table illustrating an example of timetable information according to the present embodiment.
FIG. 3B is a diagram illustrating an example of timetable information according to the present embodiment.
FIG. 4 is a table illustrating an example of a resource operation plan according to the present embodiment.
FIG. 5A is a table illustrating an example of passenger OD information according to the present embodiment.
FIG. 5B is a table illustrating an example of evaluation index information according to the present embodiment.
FIG. 6A is a table illustrating an example of resource status information according to the present embodiment.
FIG. 6B is a table illustrating an example of change-restriction-constraint generation condition information according to the present embodiment.
FIG. 7A is a table illustrating an example of intensity-change-desired constraint information according to the present embodiment.
FIG. 7B is a table illustrating an example of timetable variable information according to the present embodiment.
FIG. 8A is a table illustrating an example of plan-creation-algorithm relationship model information according to the present embodiment.
FIG. 8B is a table illustrating an example of plan-creation-algorithm information according to the present embodiment.
FIG. 9 is a flow chart showing an example of an timetable plan creation method according to the present embodiment.
FIG. 10 is a flow chart showing an example of an timetable plan creation method according to the present embodiment.
FIG. 11 is a flow chart showing an example of an timetable plan creation method according to the present embodiment.
FIG. 12 is a flow chart showing an example of an timetable plan creation method according to the present embodiment.
FIG. 13 is a flow chart showing an example of an timetable plan creation method according to the present embodiment.
FIG. 14 is a flow chart showing an example of an timetable plan creation method according to the present embodiment.
FIG. 15 is a flow chart showing an example of an timetable plan creation method according to the present embodiment.
FIG. 16 is a flow chart showing an example of an timetable plan creation method according to the present embodiment.
FIG. 17 is a flow chart showing an example of an timetable plan creation method according to the present embodiment.
FIG. 18A is a diagram illustrating a screen example according to the present embodiment.
FIG. 18B is a diagram illustrating a screen example according to the present embodiment.
FIG. 19 is a diagram illustrating a screen example according to the present embodiment.

### Description of Embodiments

### <Overview>

Concerning the timetable plan, computer-based plan evaluation technology and plan creation technology have been developed with the aim of reducing workload and improving quality. Evaluation of the timetable plan is based on actual data or simulation from various perspectives (such as a congestion rate, robustness, and a facility availability factor). In addition, for creating an timetable plan, there are various methods, depending on targets (such as a stop duration and the number of trains) and purposes (such as congestion equalization and robustness improvement).

Herein, a work of creating or updating both a timetable and a resource operation plan as the timetable plan will be referred to as an "timetable-plan creation work". In addition, a date on which a certain timetable plan is implemented as a transport service is referred to as an "execution date (of the timetable plan)", and a date on which the timetable-plan creation work (plan creation or updating) is carried out for the timetable plan that is executed on a certain execution date is referred to as a "creation date (of the timetable plan)".

Conventionally, in the timetable-plan creation work, even if evaluation indexes to be improved have been determined, it is difficult to make an appropriate choice, such as which variables should be updated or what planning technology should be combined, and trial and error have been necessary.

In addition, recently, passenger demand changes abruptly due to policy or the like, and there is a need to frequently update the timetable plan to meet the travel demand. However, in order to create an executable plan, it is necessary to consider resource status on the execution date and the creation date of the plan. In general, when updating an timetable plan whose execution date come immediately from its creation date, the resource constraint becomes stronger, and it is difficult to make a re-planning that may affect crew schedules or vehicle inspection schedules (already determined).

In this regard, according to the present invention, for an timetable plan that includes a train timetable and a resource operation plan and that is composed of complex timetable variables, a high-quality and executable timetable plan is created by changing the intensity of a constraint which is to be generated depending on a possibility of change in the resource operation plan on the execution date of the timetable plan. Furthermore, it is possible to efficiently respond to a daily environmental change in the timetable plan creation work and to create an appropriate timetable plan.

### <Network Configuration>

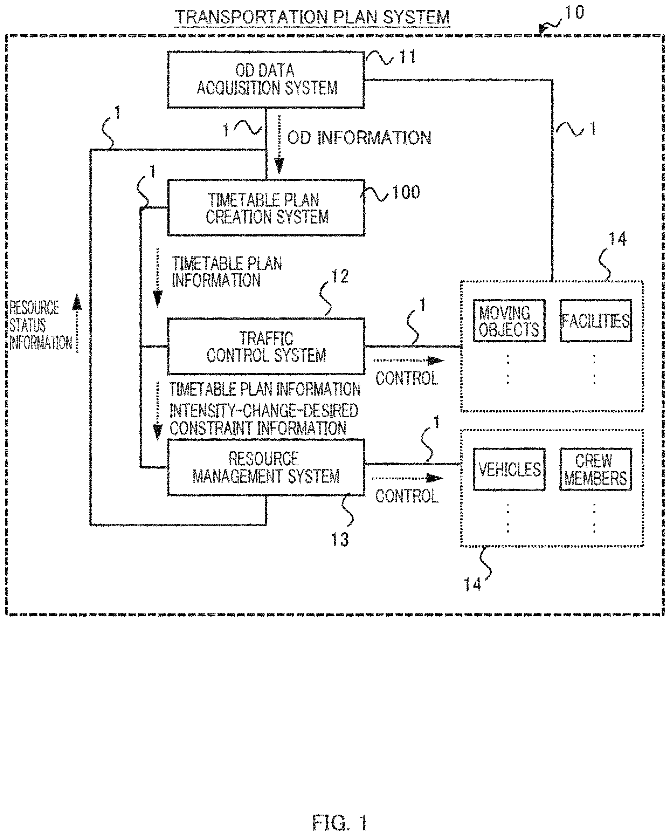

The following describes embodiments of the present invention in detail with reference to the drawings. FIG. 1 illustrates a transportation plan system 10 of the present embodiment, and FIG. 1 is a network diagram mainly including an timetable plan creation system 100.

The timetable plan creation system 100 shown in FIG. 1 is a computer that makes it possible to efficiently respond to a daily environmental change in the timetable plan creation work and to create an appropriate timetable plan.

As shown in FIG. 1, in the transportation plan system 10 according to the present embodiment, the timetable plan creation system 100 is communicatably connected to an OD data acquisition system 11, a traffic control system 12, and a resource management system 13, and the like via a network 1.

Note that a control target of the traffic control system 12 and a management target of the resource management system 13 are mobile resources 14 such as moving objects such as trains, vehicles that constitute trains, crew members or signal equipment necessary for operation, and the like. Therefore, the configuration of the transportation plan system 10 may include such mobile resources 14.

In the above-described network configuration, the OD data acquisition system 11 is a system that acquires data such as the number of passengers getting on or off at each station, from a ticket gate system of a railway station. Naturally, the OD data acquisition system 11 may also be such a ticket gate system itself.

The traffic control system 12 is a system that controls operation of trains or mobile resources 14 such as signal equipment, on the basis of the timetable or the like indicated by the timetable plan information. Furthermore, the resource management system 13 is a system that secures mobile resources 14 such as vehicles constituting the above-described train and their crew members depending on the timetable plan and allocates the mobile resources 14 at appropriate timing. Both the traffic control system 12 and the resource management system 13 may be similar to those of the existing ones.

The timetable plan creation system 100 according to the present embodiment executes timetable plan creation based on the OD data obtained from the OD data acquisition system 11, resource status information obtained from the resource management system 13, and the like. The created timetable plan is distributed to the traffic control system 12 and the resource management system 13 via the network 1 and is utilized.

### <Hardware Configuration>

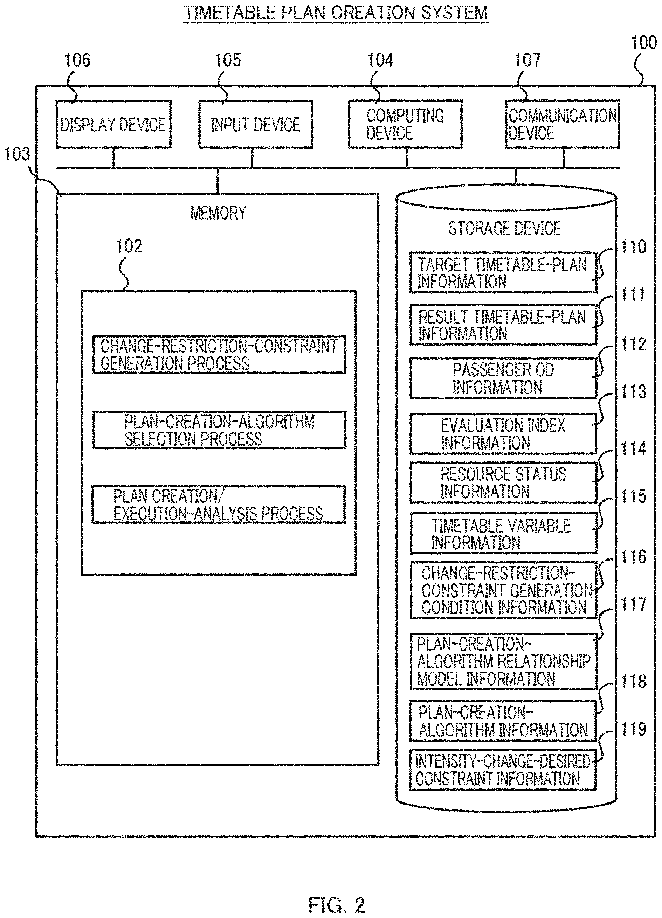

A hardware configuration of the timetable plan creation system 100 according to the present embodiment is shown in FIG. 2 as described below.

That is, the timetable plan creation system 100 includes a storage device 101, a memory 103, a computing device 104, an input device 105, a display device 106, and a communication device 107.

Among them, the storage device 101 includes an appropriate nonvolatile storage element such as an SSD (Solid State Drive) or a hard disk drive.

The memory 103 includes a volatile storage element such as a RAM.

In addition, the computing device 104 is a CPU that reads a program 102 stored in the storage device 101 into the memory 103 and executes it to perform overall control of the device itself, and performs various determination, computation, and control processes.

The input device 105 is a device such as a keyboard, a mouse, or a microphone that receives key input or voice input from a user.

The display device 106 is a display that displays data processed by the computing device 104.

The communication device 107 may be a network interface card or the like that is connected to the network 1 to process communication with the OD data acquisition system 11, the traffic control system 12, the resource management system 13, and the like.

In addition to the program 102 for embedding functions necessary as the timetable plan creation system 100 according to the present embodiment, the storage device 101 at least stores target timetable-plan information 110, result timetable-plan information 111, passenger OD information 112, evaluation index information 113, resource status information 114, timetable variable information 115, change-restriction-constraint generation condition information 116, plan-creation-algorithm relationship model information 117, plan-creation-algorithm information 118, and intensity-change-request-constraint information 119. Note that these types of information will be described later in detail.

In addition, the program 102 includes at least the following processes: a change-restriction-constraint generation process, a plan-creation-algorithm selection process, and a plan creation/execution-analysis process.

### <Example of Data Structure>

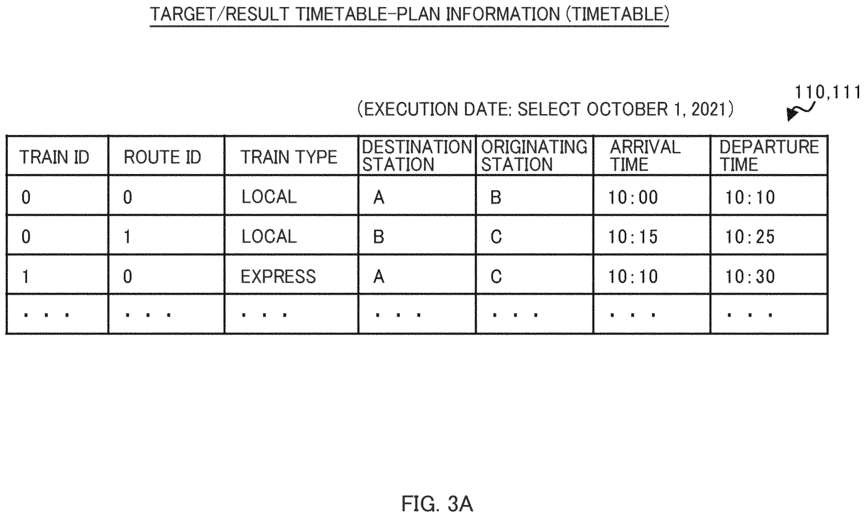

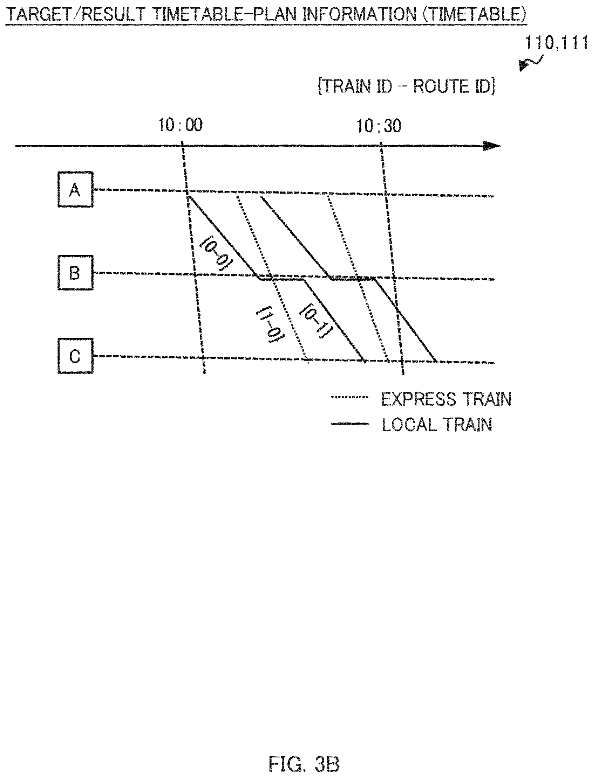

Subsequently, various types of information used by the timetable plan creation system 100 according to the present embodiment will be described. FIGS. 3A and 3B show an example of target/result timetable-plan information (timetable) 110 and 111 according to the present embodiment. Note that, for the sake of convenience in the description, timetable plan information to be processed, that is, the target timetable-plan information 110, and timetable plan information which is the result of the process, that is, the result timetable-plan information 111, are collectively referred to as "target/result timetable-plan information". This is because the data structure etc. thereof are identical.

The target/result timetable-plan information (timetable) 110 and 111 according to the present embodiment are examples of the timetable information that constitutes the timetable plan information, and is a collection of records containing data as follow: train ID; route ID; train type; destination station; originating station; arrival time; and departure time. In addition, the diagram of FIG. 3B is a timetable in which the above-mentioned pieces of information are indicated by arranging time on the horizontal axis and the names of stations at distances on the vertical axis.

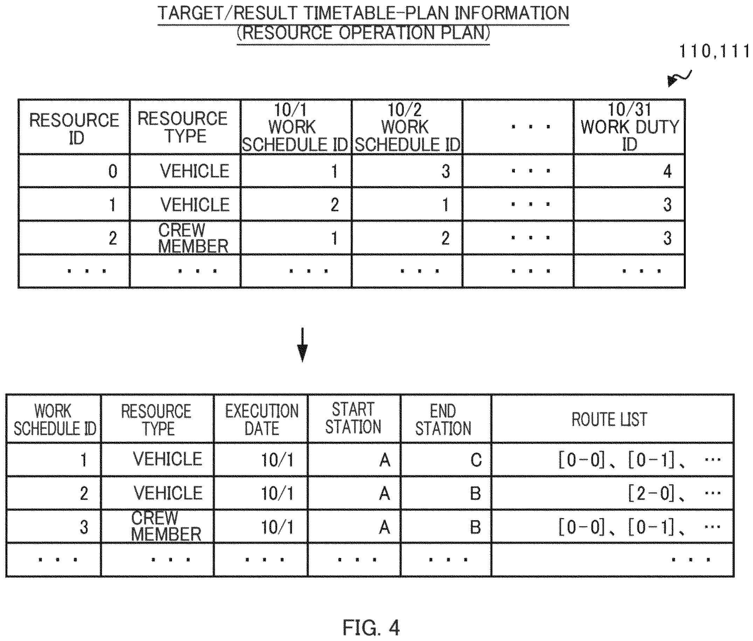

Subsequently, FIG. 4 shows an example of the target/result timetable-plan information (resource timetable plan) 110 and 111 according to the present embodiment. The target/result timetable-plan information (resource operation plan) 110 and 111 according to the present embodiment is information for managing allocation of vehicles or crew members as resources that are used in railway operation.

Such target/result timetable-plan information (resource operation plan) 110, 111 is a collection of records each containing data as follow: resource ID; resource type; and ID of allocated work duties of resources on their operation date. In the example of the target/result timetable-plan information (resource operation plan) 110 and 111 shown in FIG. 4, each work duty is associated with the following kinds of information: the type of an allocated resource; the execution date on which the resource is used on the work duty; a start station; an end station; and a route list.

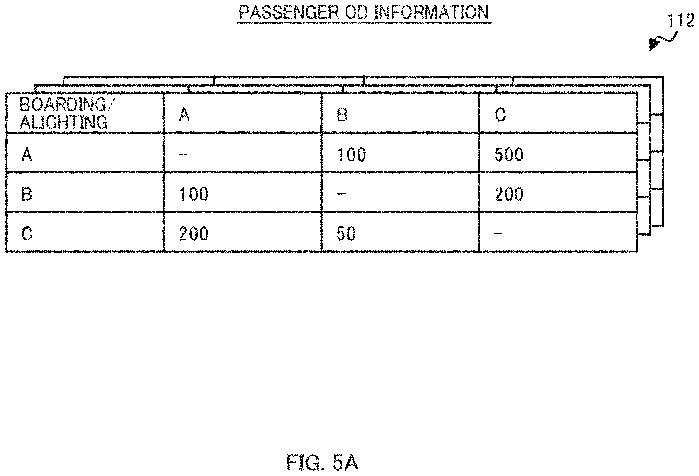

Subsequently, FIG. 5A shows an example of passenger OD information 112 according to the present embodiment. The passenger OD information 112 according to the present embodiment is information representing the numbers of passengers getting on or off for each combination among the target stations (in the example of the figure, stations A to C) as a boarding station and an alighting station.

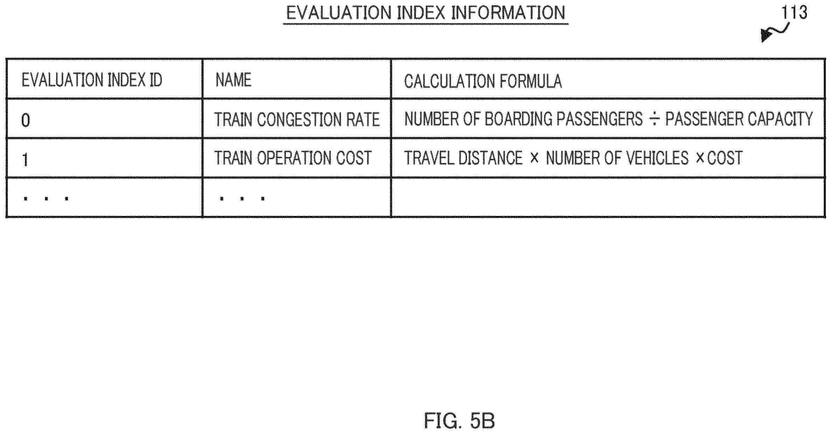

Subsequently, FIG. 5B shows an example of the evaluation index information 113 according to the present embodiment. The evaluation index information 113 according to the present embodiment is information that defines evaluation indexes relating to the timetable plan. In the example of FIG. 5B, the evaluation index information 113 is a collection of records each of which includes an evaluation index ID as the unique identifier and pieces of information, namely the name of the evaluation index and the calculation formula of the evaluation index.

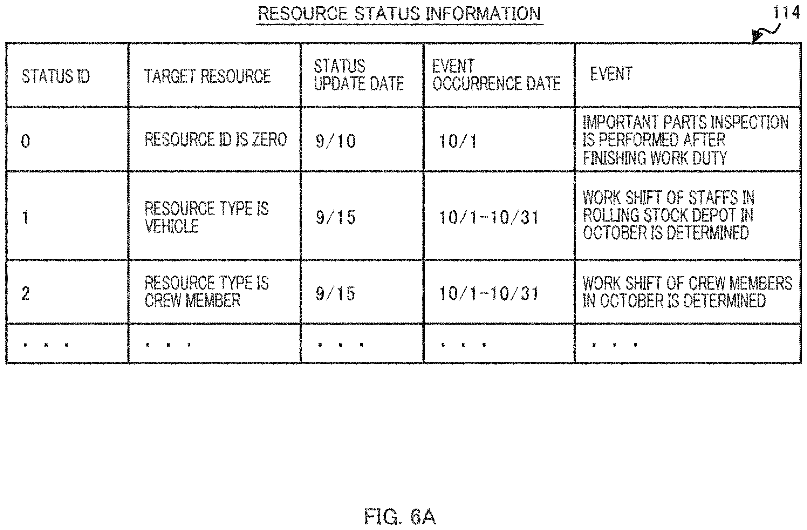

Subsequently, FIG. 6A shows an example of the resource status information 114 according to the present embodiment. The resource status information 114 according to the present embodiment indicates status of various events such as inspection, test, and shift assignment of resources such as vehicles or crew members. In the example of FIG. 6A, the resource status information 114 is a collection of records each of which includes a status ID as the unique identifier and data, namely a target resource, a status update date, an event occurrence date, and an event.

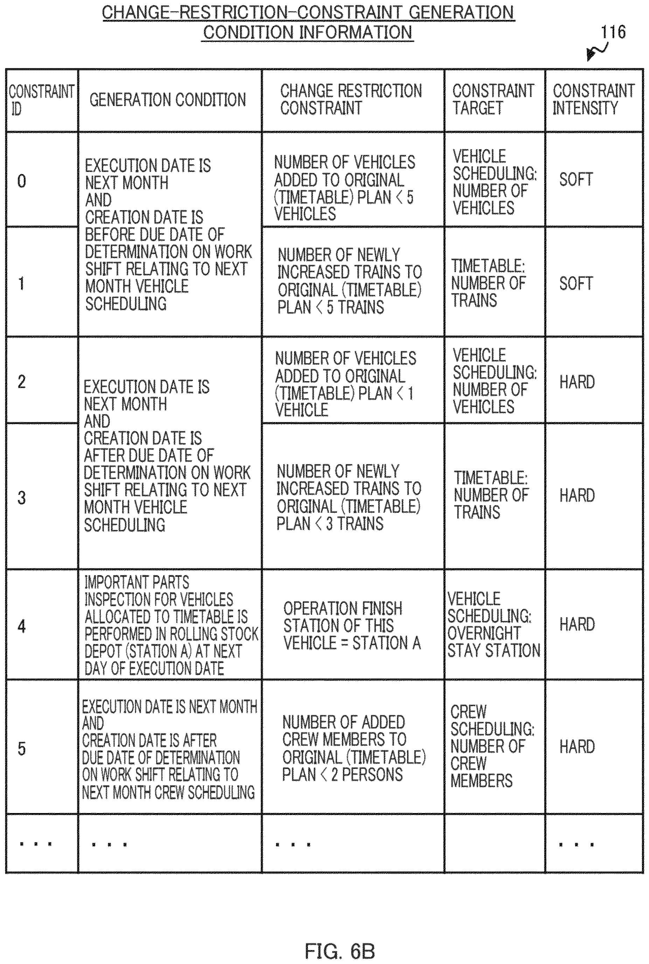

Subsequently, FIG. 6B shows an example of change-restriction-constraint generation condition information 116 according to the present embodiment. The change-restriction-constraint generation condition information 116 according to the present embodiment is information in which a changeable amount and an intensity of constraint (soft or hard) for each of the timetable variables of the timetable plan are associated on the basis of resource information (e.g., a vehicle inspection status), an execution date, and a creation date. In the example of FIG. 6B, the change-restriction-constraint generation condition information 116 is a collection of records each of which includes a constraint ID as the unique identifier and pieces of information, namely a generation condition, a change restriction constraint, a constraint target, and a constraint intensity.

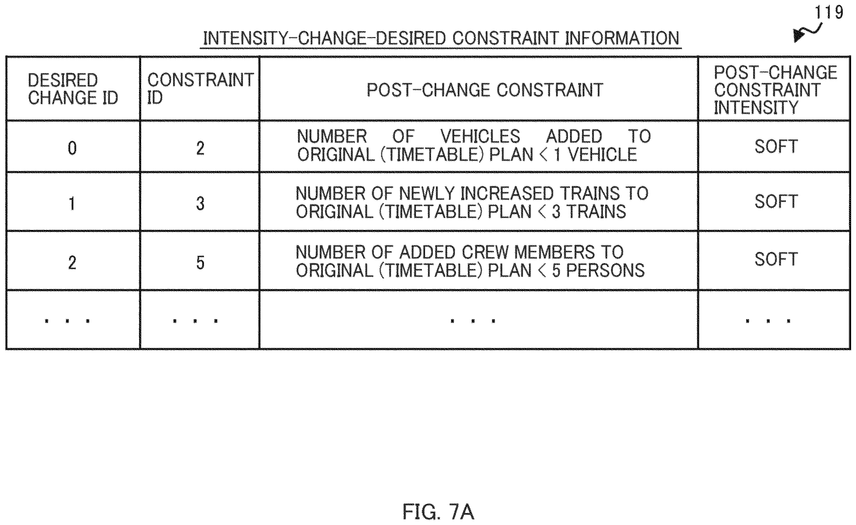

Subsequently, FIG. 7A shows an example of intensity-change-desired constraint information 119 according to the present embodiment. The intensity-change-desired constraint information 119 according to the present embodiment is information on a desired change of the intensity of a constraint in the change-restriction-constraint generation condition information. In the example of FIG. 7A, the intensity-change-desired constraint information 119 is a collection of records each of which includes a desired change ID as the unique identifier and data, namely the constraint ID indicating a target constraint, a post-change constraint (that is, desired content), and a post-change constraint intensity.

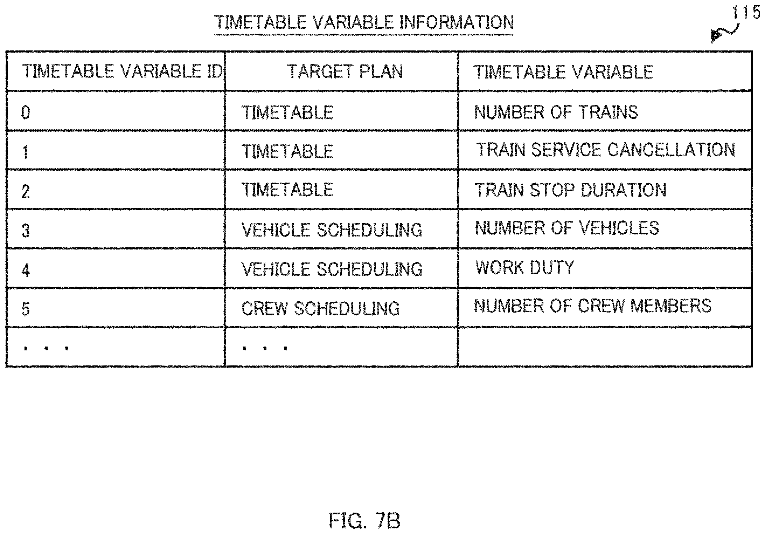

Subsequently, FIG. 7B shows an example of timetable variable information 115 according to the present embodiment. The timetable variable information 115 according to the present embodiment is information relates to variables that constitute in the timetable plan and that can be subject to change. In the example of FIG. 7B, the timetable variable information 115 is a collection of records each of which includes a timetable variable ID as the unique identifier and pieces of information, namely a target plan and a timetable variable.

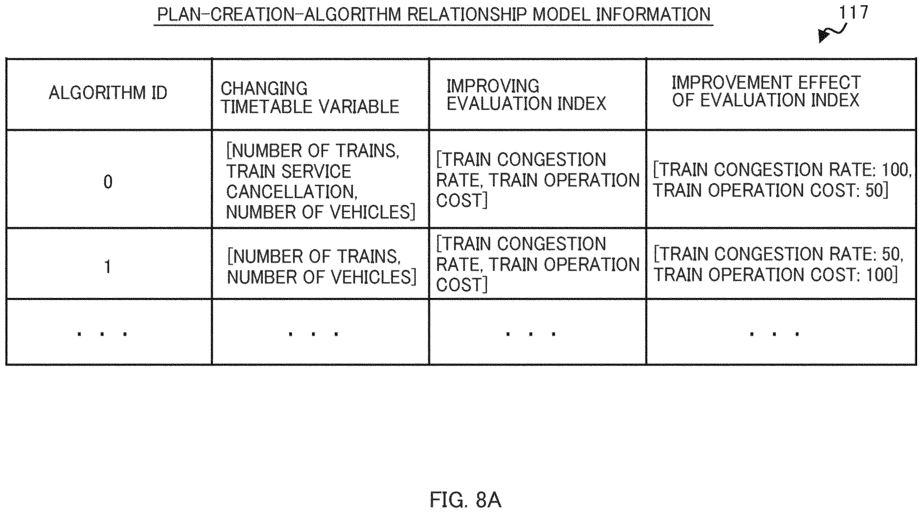

Subsequently, FIG. 8A shows an example of plan-creation-algorithm relationship model information 117 according to the present embodiment. The plan-creation-algorithm relationship model information 117 according to the present embodiment is information in which a creation algorithm of the timetable plan and improvement effects of each of the evaluation indexes in the case of using that algorithm are associated with each other and determined.

In the example of FIG. 8A, the plan-creation-algorithm relationship model information 117 is a collection of records each of which includes: an algorithm ID that indicates an algorithm and that serves as the unique identifier; and data, namely a timetable variable to be changed, an improving evaluation index for this timetable variable, and an improvement effects of the evaluation index.

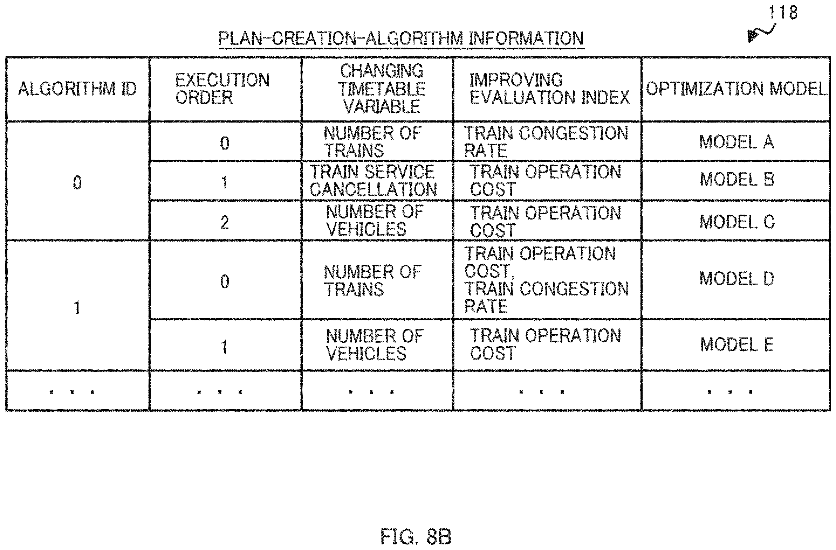

Subsequently, FIG. 8B shows an example of plan-creation-algorithm information 118 according to the present embodiment. The plan-creation-algorithm information 118 according to the present embodiment is information in which algorithms used for creating the timetable plan are determined.

In the example of FIG. 8B, the plan-creation-algorithm information 118 is a collection of records each of which includes an algorithm ID that uniquely indicates each algorithm as the unique identifier, and the following pieces of information: the number in an execution order of procedures in the algorithm; a timetable variable to be processed in that number of the execution order (changing timetable variable); the improving evaluation index for that timetable variable; and an optimization model. The aforementioned optimization model will be described later.

### <Flow Example: Main Flow>

Hereinafter, an actual procedure of the timetable plan creation method according to the present embodiment will be described with reference to the accompanying drawings. Various operations corresponding to the timetable plan creation method described below are realized by a program that is read out into a memory or the like and executed by the timetable plan creation system 100. In addition, this program contains codes for performing various operations described below.

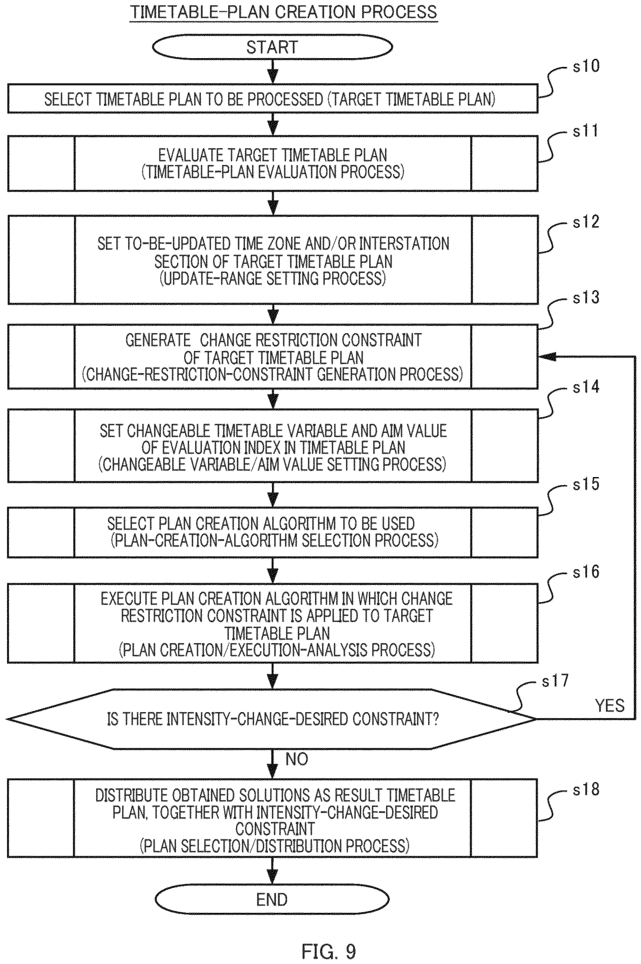

FIG. 9 is a flow chart showing an example of the timetable plan creation method according to the present embodiment. In this case, the timetable plan creation system 100 selects an timetable plan to be processed (target timetable plan) from the target timetable-plan information 110, for example, in response to a user instruction (s10).

Subsequently, the timetable plan creation system 100 evaluates the target timetable plan that has been selected in step s10 (timetable-plan evaluation process) (s11). Details of this timetable-plan evaluation process will be described later.

In addition, the timetable plan creation system 100 sets a to-be-updated time zone and/or a to-be-updated interstation section, of the target timetable plan (update-range setting process) (s12). Details of this update-range setting process will be described later.

Then, the timetable plan creation system 100 generates a change restriction constraint of the target timetable plan (change-restriction-constraint generation process) (s13). Details of this change-restriction-constraint generation process will be described later.

In addition, the timetable plan creation system 100 sets changeable timetable variables of the timetable plan and the aim values of evaluation indexes (changeable variable/aim value setting process) (s14). Details of this changeable variable/aim value setting process will be described later.

Subsequently, the timetable plan creation system 100 selects a plan creation algorithm to be used (plan-creation-algorithm selection process) (s15). Details of this plan-creation-algorithm selection process will be described later.

In addition, the timetable plan creation system 100 executes a plan creation algorithm in which the change restriction constraint is applied to the target timetable plan (plan creation/execution-analysis process) (s16). Details of this plan creation/execution-analysis process will be described later.

In addition, the timetable plan creation system 100 determines whether or not there is an intensity-change-desired constraint. As a result of the determination, if there is the intensity-change-desired constraint (s17: YES), the timetable plan creation system 100 returns the process to step s13.

Meanwhile, as a result of the aforementioned determination, if there is no intensity-change-desired constraint (s17: NO), the timetable plan creation system 100 distributes the obtained solutions as a result timetable plan, together with the intensity-change-desired constraint (plan selection/distribution process) (s18), and the system 100 terminates the process. Details of this plan selection/distribution process will be described later.

### <Flow Example: Timetable-plan Evaluation Process>

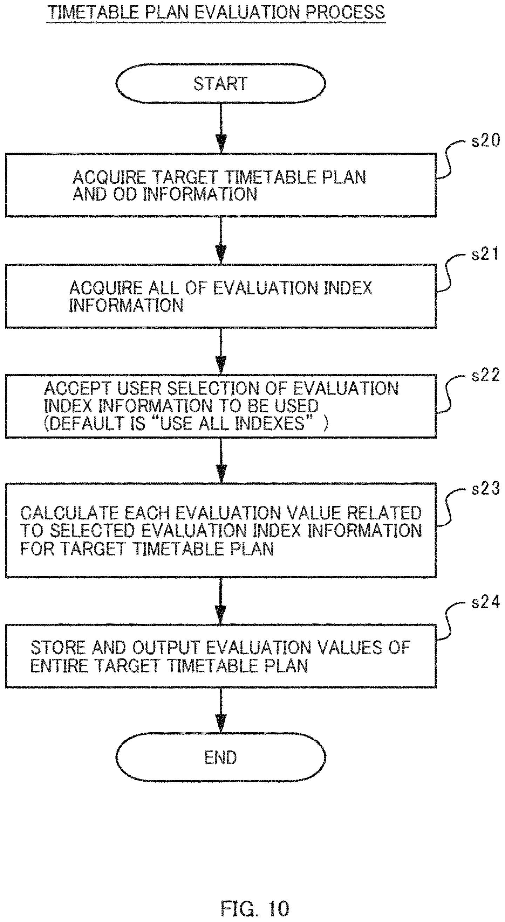

FIG. 10 is a flow chart relating to the timetable-plan evaluation process in the timetable plan creation method according to the present embodiment.

In this case, the timetable plan creation system 100 acquires the target timetable-plan information 110 and the passenger OD information 112 (s20). Regarding the target timetable-plan information 110, for example, timetable plan information is acquired which is specified by a user via a predetermined interface (input device 105). Furthermore, the passenger OD information 112 is acquired from the OD data acquisition system 11.

Furthermore, the timetable plan creation system 100 acquires all of evaluation index information 113 that is stored in the storage device 101 in advance (s21).

Subsequently, the timetable plan creation system 100 receives a user selection of the evaluation index information 113 to be used (default is "use all indexes") (s22).

In addition, for the target timetable plan that has been obtained in step s20, the timetable plan creation system 100 calculates an evaluation value related to the evaluation index information 113 that has been selected in step s22 (s23). This calculation is performed by applying necessary parameter values (values such as the number of passengers and the travel distance indicated by the passenger OD information 112 or the target timetable plan 110) to the formula of the "CALCULATION FORMULA" column of the evaluation index information 113 of FIG. 5B.

Subsequently, the timetable plan creation system 100 stores and outputs the evaluation values of the evaluation indexes in the target timetable plan (s24), and the process is terminated. Regarding such evaluation values of the target timetable plan, it can be assumed that the evaluation values for each evaluation index are associated in a table format. Therefore, the storage device 101 stores an information group as follow: an evaluation value for the evaluation index "train congestion rate" is "125 %/train"; and an evaluation value for the evaluation index "train operation cost" is "245,000 yen/train".

### <Flow Example: Update-Range Setting Process>

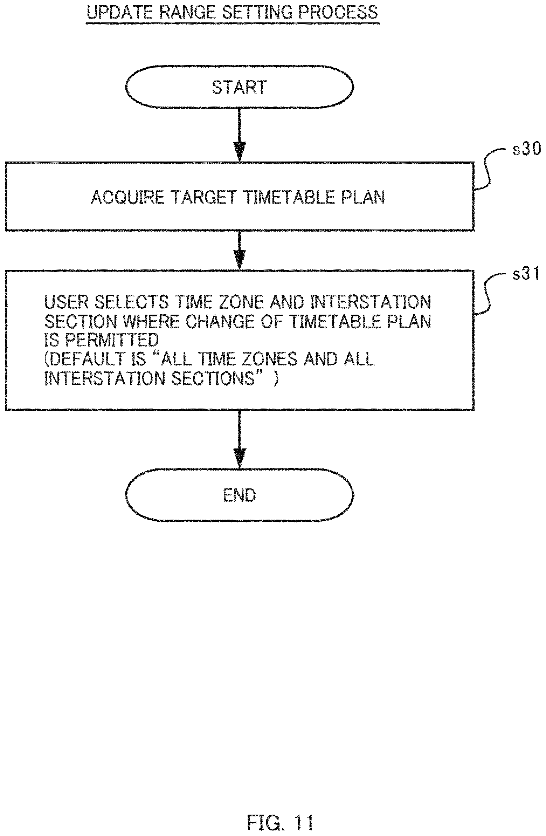

FIG. 11 is a flow chart relating to the update-range setting process in the timetable plan creation method according to the present embodiment.

In this case, the timetable plan creation system 100 acquires the target timetable-plan information 110 that has been obtained in step s20 (s30). In addition, the timetable plan creation system 100 receives a user selection for the time zone and the interstation section where a change of the timetable plan is permitted (default is "all time zones and all interstation sections") (s31), and the process is terminated.

At the time of this user selection, the timetable plan creation system 100 outputs a timetable based on the timetable plan information 110 to the display device 106, and then the user performs a selection operation such as enclosing by cursor dragging the time zones and interstation sections that are to permit a change of the timetable plan. The timetable plan creation system 100 receives the user's selection operation. Note that, for time zones and interstation sections that are not set as a range to permit a change of the timetable plan, the timetable plan creation system 100 generates constraints at the time of creating the timetable plan such that the states thereof in the original timetable plan are maintained, and the system 100 applies the constraints.

### <Flow Example: Change-Restriction-Constraint Generation Process>

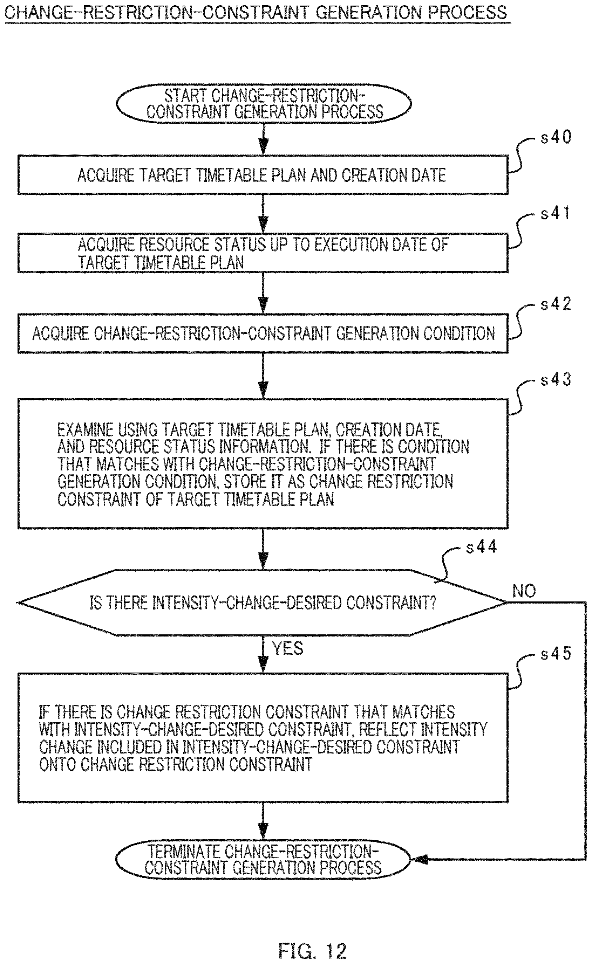

FIG. 12 is a flow chart relating to the change-restriction-constraint generation process in the timetable plan creation method according to the present embodiment.

In this case, the timetable plan creation system 100 acquires the creation date of the target timetable plan from the target timetable-plan information 110 (s40).

In addition, the timetable plan creation system 100 acquires pieces of the resource status information 114 that cover from the aforementioned creation date to the execution date of the target timetable plan (s41).

Subsequently, the timetable plan creation system 100 acquires the change-restriction-constraint generation condition information 116 from the storage device 101 (s42).

In addition, the timetable plan creation system 100 checks the target timetable plan and the creation date that have been obtained in step s40 and the resource status information 114 that has been obtained in step s41, against the change-restriction-constraint generation condition information 116 that has been obtained in step s42. And, the system 100 specifies a change-restriction-constraint generation condition in which the values of the change-restriction-constraint generation condition information 116, namely a "generation condition", a "change restriction constraint", and a "constraint target", matches therewith, and then the system 100 stores the change-restriction-constraint generation condition into the storage device 101 as a change restriction constraint of the target timetable plan (s43).

In addition, the timetable plan creation system 100 determines whether, among the intensity-change-desired constraint information 119, the "constraint ID" exists or not which matches with the constraint ID of the change-restriction-constraint generation condition that has been specified in step s43, that is, whether there is an intensity-change-desired constraint (s44).

As a result of the aforementioned determination, if there is no intensity-change-desired constraint (s44: NO), the timetable plan creation system 100 terminates this flow.

Otherwise, as a result of the aforementioned determination, if there is an intensity-change-desired constraint (s44: YES), the timetable plan creation system 100 reflects the intensity change contained in the intensity-change-desired constraint, to the change restriction constraint (s45), and the system 100 terminates the process. Regarding this range, it can be specifically assumed that the value of the "change restriction constraint" column of the constraint whose intensity is to be changed is replaced with the value indicated by the intensity-change-desired constraint.

### <Flow Example: Changeable Variable/Aim Value Setting Process>

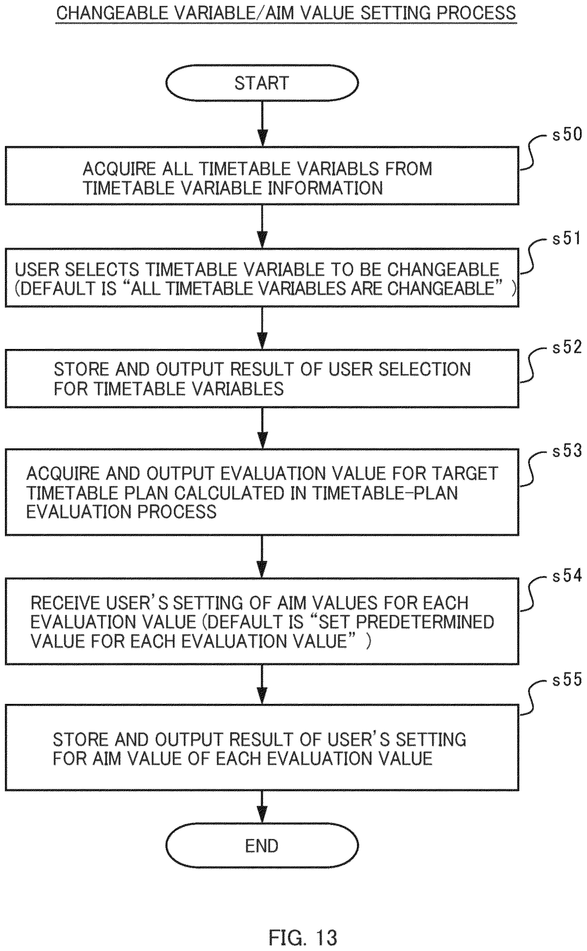

FIG. 13 is a flow chart relating to the changeable variable/aim value setting process in the timetable plan creation method according to the present embodiment.

In this case, the timetable plan creation system 100 acquires all timetable variables from the timetable variable information 115 (s50). This timetable variable information 115 is information in which the changeable timetable variables of the timetable plan (timetable and resource operation plan) are listed. This information is used by a user in the later timetable-plan creation process, in order to restrict the variables that are actually permitted to be changed.

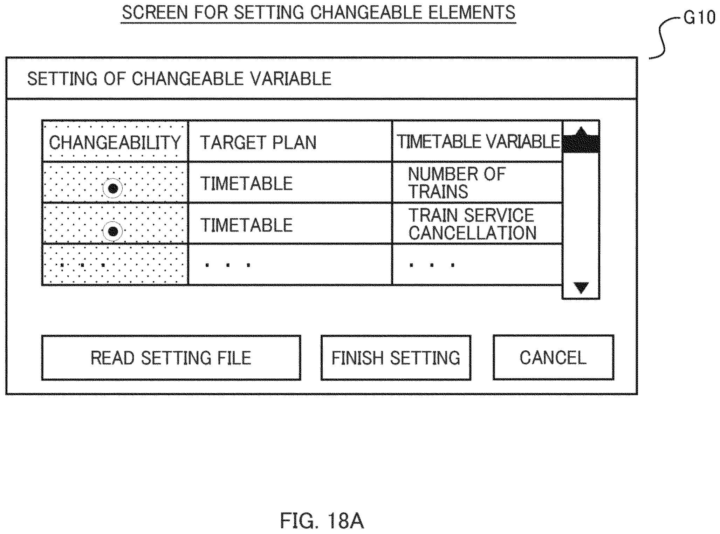

The timetable plan creation system 100 receives user selection of timetable variable(s) that are made to be changeable (default is "all timetable variables are changeable") (s51). In this case, as shown in screen G10 of FIG. 18A, the timetable plan creation system 100 causes the display device 106 to display a screen that includes interfaces (e.g., a radio button) for receiving designation of changeability for each timetable variable, and receives the user selection.

Subsequently, the timetable plan creation system 100 stores a result of the user selection for the timetable variables that has been obtained in step s51 into the storage device 101 (s52).

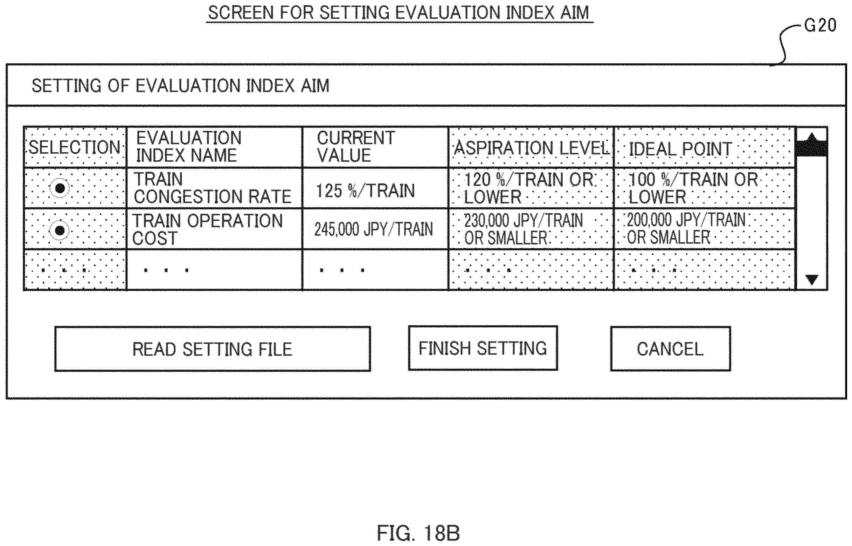

In addition, the timetable plan creation system 100 acquires the evaluation values of the target timetable plan that have been calculated in the timetable-plan evaluation process (flow in FIG. 10), and outputs them on the display device 106 (s53). In this case, as shown in the screen G20 of FIG. 18B, the timetable plan creation system 100 lists a current value (current evaluation value) for each evaluation index, and also displays an interface for inputting aim values such as an aspiration level and an ideal point for the evaluation index concerned.

Subsequently, as shown in screen G20, the timetable plan creation system 100 receives user's setting for the aim value for each of the evaluation values that have been displayed in step s53 (default is "setting predetermined values for each of the evaluation values") (s54). In the example in FIG. 18B, while the current value of the evaluation index named "train congestion rate" is "125 %/train", a user sets aim values such as the aspiration level of "120 %/train or less", and the ideal point of "100 Strain or less".

In addition, the timetable plan creation system 100 stores the aim values of each evaluation value that have been obtained on the screen G20 in step s54 into the storage device 101 (s55), and the process is terminated. Note that the aspiration level is a value which a user can compromise with, and the ideal point is a value which the user desires.

### <Flow Example: Plan-creation-Algorithm Selection Process>

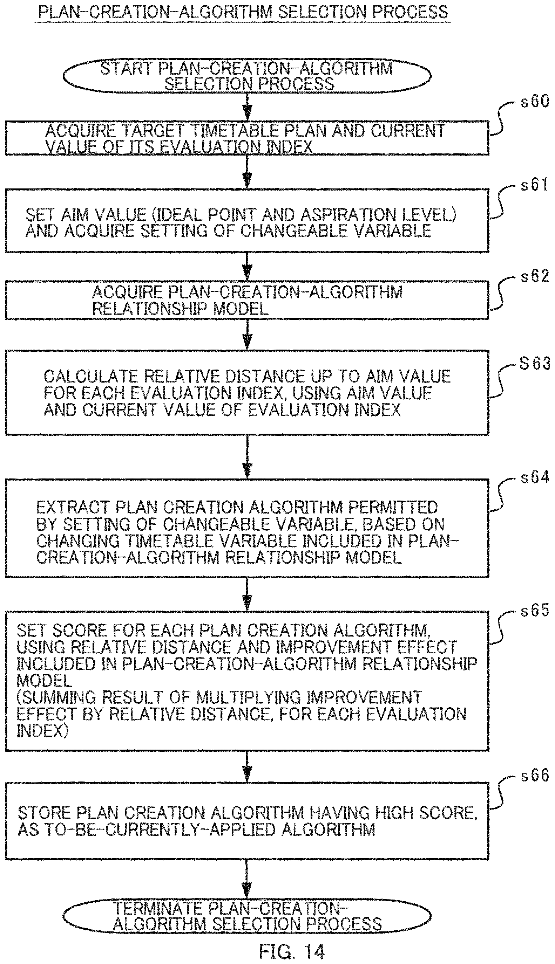

FIG. 14 is a flow chart relating to a plan-creation-algorithm selection process in the timetable plan creation method according to the present embodiment.

In this case, the timetable plan creation system 100 acquires the target timetable plan that has been processed up to this stage and its current values of the evaluation indexes (those obtained in step s53 in the flow of FIG. 13) (s60).

Subsequently, the timetable plan creation system 100 acquires the followings from the storage device 101: the setting of the aim values (ideal point and aspiration level) that has been obtained in steps s54 and s55 in the flow of FIG. 13; and the setting of the changeable variables (obtained in screen G10 of FIG. 18A) (s61).

In addition, the timetable plan creation system 100 acquires the plan-creation-algorithm relationship model from the plan-creation-algorithm relationship model information 117 (s62).

Subsequently, the timetable plan creation system 100 calculates a relative distance to the aim value for each of the evaluation indexes, using the aim value and the current value of the evaluation index (s63). This calculation is performed based on a formula "relative distance = (current value - aspiration level) / (aspiration level - ideal point)", for example. If the current value of the train congestion rate is "125", the aspiration level is "120", and the ideal point is "100", the calculation can be performed such that "relative distance = (125 - 120) / (120 - 100) = 0.25".

Note that, as a method for calculating the relative distance from the aspiration level and the ideal point described above, a predetermined existing technique may be appropriately employed (e.g., H. Nakayama, Y. Sawaragi, "Satisfying trade-off method for multi-objective programming," Lecture Notes in Economics and Mathematical Systems, vol. 229, pp. 113-122 (1984), https://link.springer.com/chapter/10.1007/978-3-662-00184-4_13).

Then, the timetable plan creation system 100 extracts the plan creation algorithm permitted by the setting of the changeable variables described above (received on the screen G10 in FIG. 18A), based on the changing timetable variable included in the plan-creation-algorithm relationship model that has been obtained in step s62 described above (s64). In this case, the timetable plan creation system 100 specifies the plan creation algorithm whose "changing timetable variables" include the changeable variable obtained in step s61, and which is to improve evaluation indexes that have already had current values and aim values in steps s60 and s61, and the system 100 acquires information thereof.

Subsequently, the timetable plan creation system 100 sets a score for each plan creation algorithm, using the improvement effect included in the plan-creation-algorithm relationship model and the relative distance obtained in step s63 (e.g., summing the results of multiplying an improvement effect by a relative distance for each of the evaluation indexes) (s65).

For example, if the improvement effect on the train congestion rate by a certain algorithm is "100" and the relative distance is "0.25", and the improvement effect on the train operation cost is "50" and the relative distance is "0.5", then the score of the algorithm can be calculated as "100 × 0.25 + 50 × 0.5 = 25 + 25 = 50 (points)".

In addition, based on the score obtained in step s65 described above, the timetable plan creation system 100 selects as a to-be-currently-applied algorithm plan creation algorithms each of which has a high score (e.g., selecting the top three algorithms as candidates to apply). Then, the system 100 stores this information into the storage device 101 (s66), and the process is terminated.

### <Flow Example: Plan creation/Execution-Analysis Process>

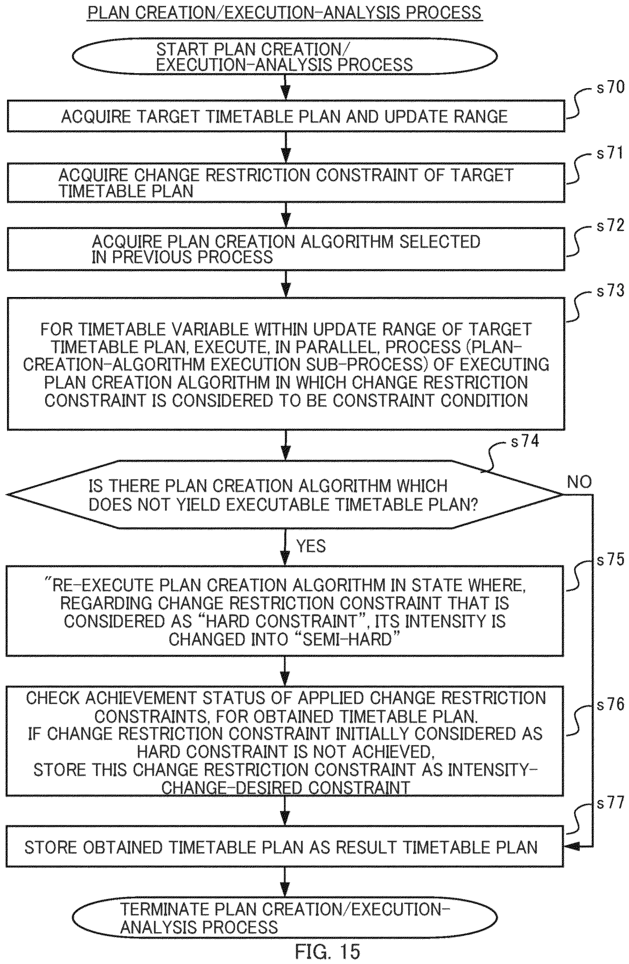

FIG. 15 is a flow chart relating to the plan creation/execution-analysis process in of the timetable plan creation method according to the present embodiment.

In this case, the timetable plan creation system 100 acquires the target timetable plan and the update range (s70).

Subsequently, the timetable plan creation system 100 acquires the change restriction constraints of the target timetable plan (those obtained through the flow up to this stage), from the storage device 101 (s71). In addition, the timetable plan creation system 100 acquires the plan creation algorithms selected in the flow of FIG. 14, from the storage device 101 (s72) .

Note that a plurality of the above-described plan creation algorithms are each composed of a plurality of optimization models each of which has the number of an execution order, and each optimization model has information as follow: a (or a plurality of) to-be-changed timetable variable(s) and an (or a plurality of) to-be-improved evaluation index(es). Information on the algorithm of the ID that has been selected in the plan-creation-algorithm selection process is extracted.

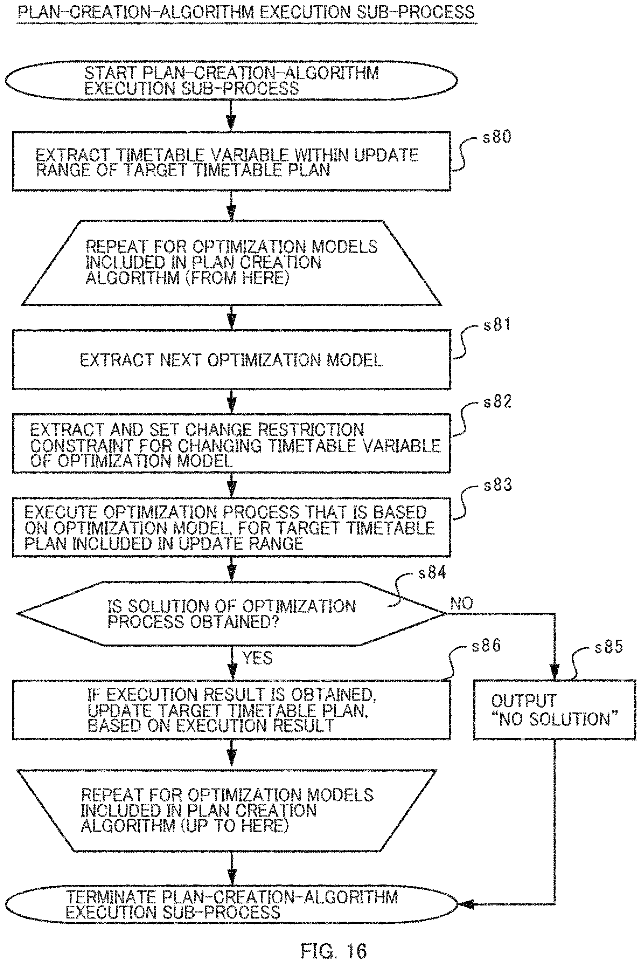

Subsequently, for the timetable variable(s) of the target timetable plan within the update range, the timetable plan creation system 100 executes in parallel a process (plan-creation-algorithm execution sub-process) of executing the plan creation algorithms (obtained in step s72, there are assumed to be multiple) in which the change restriction constraint obtained in step s71 is considered to be a constraint condition (s73). In this case, this means that the plan-creation-algorithm execution sub-process (corresponding to the flow in FIG. 16 described later) is executed in parallel as many times as the number of the selected plan creation algorithms.

Then, based on the results of the processing up to this state, the timetable plan creation system 100 determines whether or not there is a plan creation algorithm that does not yield an executable timetable plan (s74).

As a result of the determination described above, if there is no plan creation algorithm that does not yield an executable timetable plan (s74: NO), the timetable plan creation system 100 proceeds the process to step s77.

Otherwise, as a result of the determination described above, if there is a plan creation algorithm that does not yield an executable timetable plan (s74: YES), the timetable plan creation system 100 re-executes the plan creation algorithm in a state where, regarding the change restriction constraint that is considered as "hard constraint", its intensity is changed into "semi-hard" (s75).

For example, it is assumed that there is no solution of an updated timetable plan (execution date: October 1, 2021) based on the plan creation algorithm that has an "algorithm ID = 1", that is, the timetable plan cannot be obtained. In addition, it is assumed that, in this execution, the number of the execution order is 1, the changing timetable variable is the number of vehicles, and execution of the optimization model E fails.

In the case where there is thus a plan creation algorithm having no solution, the timetable plan creation system 100 stores, into the storage device 101, information of which optimization model has failed and which timetable variable that optimization model would have changed. In addition, among the change restriction constraints which are set for the concerned timetable variable, if there is one whose constraint is hard, the timetable plan creation system 100 changes it to semi-hard and executes again the same plan creation algorithm, to obtain an executable solution. In the case of the example described above, the constraint whose "constraint ID is 2" is changed to the semi-hard constraint, and the algorithm is re-executed.

Subsequently, regarding the obtained timetable plan, the timetable plan creation system 100 checks the achievement status of the applied change restriction constraints. If a change restriction constraint which is initially considered as "hard constraint" is not achieved, this change restriction constraint is stored as an intensity-change-desired constraint (s76).

In this case, the timetable plan creation system 100 checks whether or not the timetable plan obtained after the alleviating the change restriction constraint satisfies the content of the change restriction constraint, which is a "hard constraint". If it does not satisfy the content of the change restriction constraint, the timetable plan creation system 100 determines that an executable solution is obtained by alleviating the concerned change restriction constraint. Then, the timetable plan creation system 100 stores the change restriction constraint as "intensity-change-desired constraint", into the storage device 101 together with the changed content of the constraint intensity. In this example, the change restriction constraint having a "constraint ID = 2" is added to the intensity-change-desired constraint.

In addition, the timetable plan creation system 100 stores the obtained timetable plan as a result timetable plan (s77), and the process is terminated.

### <Flow Example: Plan-creation-Algorithm Execution Sub-Process >

FIG. 16 is a flow chart relating to the plan-creation-algorithm execution sub-process in the timetable plan creation method according to the present embodiment.

In this case, the timetable plan creation system 100 extracts the timetable variable that is within the update range of the target timetable plan (s80). Note that the steps subsequent thereto until step s86 are repeatedly executed for each optimization model included in the plan creation algorithm.

In addition, the timetable plan creation system 100 extracts the next optimization model (s81).

Subsequently, the timetable plan creation system 100 extracts and sets a change restriction constraint for the changing timetable variable of the optimization model (s82).

Furthermore, the timetable plan creation system 100 performs an optimization process that is based on the optimization model, for the target timetable plan included in the update range (s83).

Subsequently, the timetable plan creation system 100 determines whether or not a solution to the optimization process is obtained (s84) .

As a result of the aforementioned determination, if the solution to the optimization process is not obtained (s84: NO), the timetable plan creation system 100 outputs "NO SOLUTION" to the display device 106 (s85) and terminates the process.

Otherwise, as a result of the aforementioned determination, if the solution to the optimization process is obtained (s84: YES), and if an execution result is obtained, the timetable plan creation system 100 updates the target timetable plan, based on the execution result (s86), and terminates the process.

### <Flow Example: Plan Selection/Distribution Process>

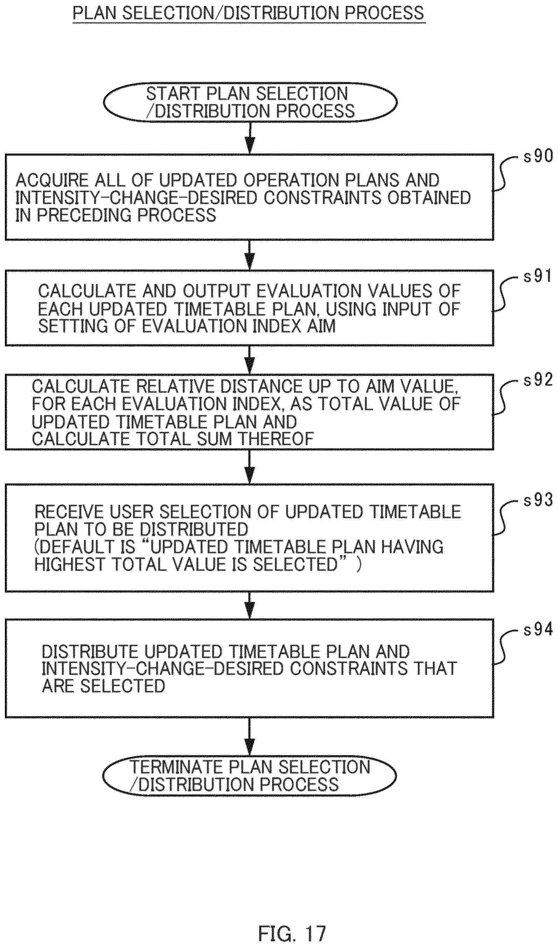

FIG. 17 is a flow chart relating to the plan selection/distribution process in the timetable plan creation method according to the present embodiment.

In this case, the timetable plan creation system 100 acquires the updated timetable plan that has been obtained up to the above-described flows and the intensity-change-desired constraint, from the storage device 101 (s90).

Subsequently, the timetable plan creation system 100 calculates and outputs the evaluation values of the updated timetable plans, using the input of the setting of the evaluation index aim (screen G20 in FIG. 18B) (s91).

In addition, the timetable plan creation system 100 calculates the relative distance to the aim value, for each evaluation index and as a total value of the updated timetable plan, and then calculates the total sum thereof (s92). In this case, the timetable plan creation system 100 outputs the total sum of the relative distance based on the aim value (aspiration level, ideal point) for each of the updated timetable plans, as the "total value" of that plan.

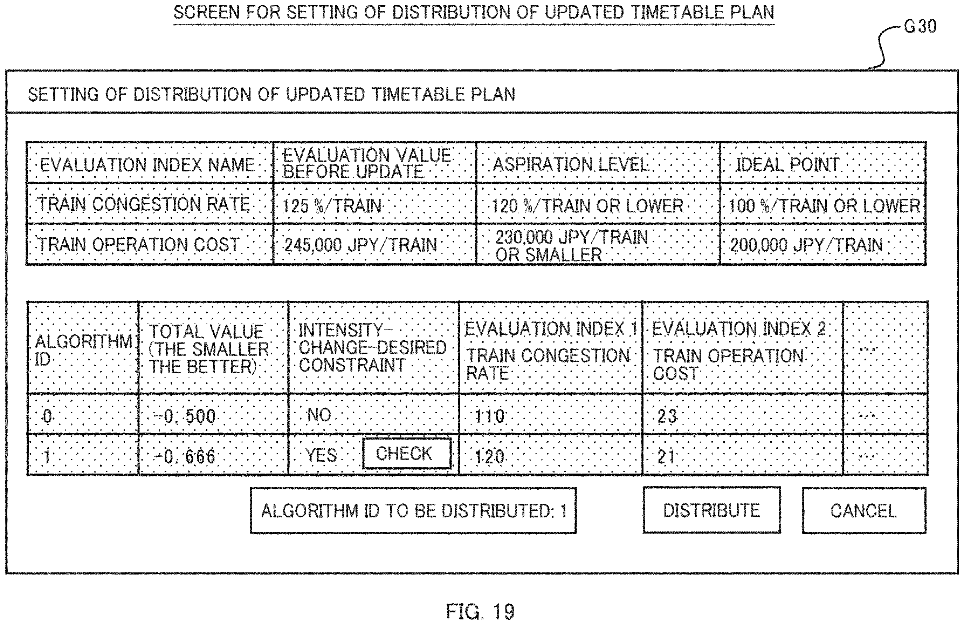

Subsequently, the timetable plan creation system 100 receives user selection for the updated timetable plans that are to be distributed (default is "the updated timetable plan having the highest total value is selected"), using the interface shown in screen G30 of FIG. 19, for example (s93).

In addition, the timetable plan creation system 100 distributes the updated timetable plan and the intensity-change-desired constraint that have been selected (s94), and terminates the process.

While the best modes for carrying out the invention have been described above in detail, the present invention is not limited thereto, and various changes or modifications may be possible without departing from the spirit thereof.

According to the present embodiment, it achieves creating of an timetable plan while taking into account a resource constraint caused due to the effect of the execution date, and also it is possible to specify and propose details of requests of the on-site burdens. This makes easier the timetable plan creation work even while the surrounding environment such as a transportation demand or a resource operation plan changes dynamically. In addition, it is possible to create a desirable timetable plan that leads to improvement of passenger evaluation while keeping increases in work load within an acceptable range, taking into account the passenger daily changing demand and resource situation.

In other words, it is possible to efficiently respond to a daily environmental change in the timetable plan creation work and to create an appropriate timetable plan.

The followings will be made clear by the description of this specification. That is, in the timetable plan creation system according to the present embodiment, it is acceptable that, in the constraint generation process, the computing device acquires information of the to-be-created timetable plan and of a creation date of the to-be-created timetable plan, the computing device acquires information regarding a status of a mobile resource in the transport service and up to an execution date of the timetable plan, the computing device specifies a condition that matches with the intensity and with the constraint indicated in the first information, by using the acquired timetable plan, the acquired creation date, and the information regarding the status of the mobile resource, and the computing device stores, in the storage device, the condition as a change restriction constraint that serves as the first information regarding the timetable plan.

As a result, it is possible to efficiently specify the change restriction constraint, making it possible to more efficiently respond to a daily environmental change in the timetable plan creation work and to create an appropriate timetable plan.

In addition, in the timetable plan creation system according to the present embodiment, it is acceptable that, if the change restriction constraint that matches with the fourth information is present, the computing device further executes a process for reflecting a desired change of the intensity included in the fourth information, to the change restriction constraint.

As a result, it is possible to execute change of the timetable variable at an appropriate intensity, making it possible to more efficiently respond to a daily environmental change in the timetable plan creation work and to create an appropriate timetable plan.

In addition, in the timetable plan creation system according to the present embodiment, it is acceptable that, in the algorithm selection process, the computing device acquires the to-be-created timetable plan and a current value of an evaluation index of the to-be-created timetable plan, the computing device acquires a aim value relating to the evaluation index and a changeable variable, the computing device calculates a relative distance that is to the aim value from the current value for each of the evaluation index, using the aim value and the current value of the evaluation index, the computing device extracts the plan creation algorithm permitted by the changeable variable, based on the timetable variable included in the third information, the computing device sets a score for each of the extracted plan creation algorithm, using the relative distance and information that is included in the third information and that is on an improvement effect, and the computing device selects the plan creation algorithm that has a relatively higher score, as a to-be-currently-applied algorithm.

As a result, it is possible to efficiently select an appropriate plan creation algorithm, making it possible to more efficiently respond to a daily environmental change in the timetable plan creation work and to create an appropriate timetable plan.

In addition, in the timetable plan creation system according to the present embodiment, it is acceptable that, in the plan creation process, the computing device acquires the to-be-created timetable plan and an update range, the computing device acquires a change restriction constraint of the to-be-created timetable plan, the computing device acquires a plan creation algorithm selected in the algorithm selection process, the computing device executes the plan creation algorithm for the timetable variable that is within the update range of the to-be-created timetable plan, by employing the change restriction constraint as a constraint condition, as a result of the executing, if a plan creation algorithm that does not yield an executable timetable plan is present, the computing device re-executes the plan creation algorithm in a state of alleviating the intensity of the change restriction constraint, regarding the timetable plan that has obtained by the re-executing, if an initial change restriction constraint that does not undergo the alleviating is not achieved based on an achievement status of the applied change restriction constraint, the computing device stores the initial change restriction constraint as an intensity-change-desired constraint, and the computing device stores the obtained timetable plan as a result timetable plan.

As a result, it is possible to create an timetable plan with alleviating the strictness of the constraint depending on a situation, making it possible to more efficiently respond to a daily environmental change in the timetable plan creation work and to create an appropriate timetable plan.

In addition, in the timetable plan creation method according to the present embodiment, it is acceptable that, in the constraint generation process, the information processing system acquires information of the to-be-created timetable plan and of a creation date of the to-be-created timetable plan, the information processing system acquires information regarding a status of a mobile resource in the transport service and up to an execution date of the timetable plan, the information processing system specifies a condition that matches with the intensity and with the constraint indicated in the first information, by using the acquired timetable plan, the acquired creation date, and the information regarding the status of the mobile resource, and the information processing system stores, in the storage device, the condition as a change restriction constraint that serves as the first information regarding the timetable plan.

In addition, in the timetable plan creation method according to the present embodiment, it is acceptable that, if the change restriction constraint that matches with the fourth information is present, the information processing system further executes a process for reflecting a desired change of the intensity included in the fourth information, to the change restriction constraint.

In addition, in the timetable plan creation method according to the present embodiment, it is acceptable that, in the algorithm selection process, the information processing system acquires the to-be-created timetable plan and a current value of an evaluation index of the to-be-created timetable plan, the information processing system acquires a aim value relating to the evaluation index and a changeable variable, the information processing system calculates a relative distance that is to the aim value from the current value for each of the evaluation index, using the aim value and the current value of the evaluation index, the information processing system extracts the plan creation algorithm permitted by the changeable variable, based on the timetable variable included in the third information, the information processing system sets a score for each of the extracted plan creation algorithm, using the relative distance and information that is included in the third information and that is on an improvement effect, and the information processing system selects the plan creation algorithm that has a relatively higher score, as a to-be-currently-applied algorithm.

In addition, in the timetable plan creation method according to the present embodiment, it is acceptable that, in the plan creation process, the information processing system acquires the to-be-created timetable plan and an update range, the information processing system acquires a change restriction constraint of the to-be-created timetable plan, the information processing system acquires a plan creation algorithm selected in the algorithm selection process, the information processing system executes the plan creation algorithm for the timetable variable that is within the update range of the to-be-created timetable plan, by employing the change restriction constraint as a constraint condition, as a result of the executing, if a plan creation algorithm that does not yield an executable timetable plan is present, the information processing system re-executes the plan creation algorithm in a state of alleviating the intensity of the change restriction constraint, regarding the timetable plan that has obtained by the re-executing, if an initial change restriction constraint that does not undergo the alleviating is not achieved based on an achievement status of the applied change restriction constraint, the information processing system stores the initial change restriction constraint as an intensity-change-desired constraint, and the information processing system stores the obtained timetable plan as a result timetable plan.

### Reference Signs List

1 network
10 transportation plan system
11 OD data acquisition system
12 traffic control system
13 resource management system
14 mobile resource (including vehicles, facilities, crew members, and the like)
100 timetable plan creation system
101 storage device
102 program
103 memory
104 computing device
105 input device
106 display device
107 communication device
110 target timetable-plan information
111 result timetable-plan information
112 passenger OD information
113 evaluation index information
114 resource status information
115 timetable variable information
116 change-restriction-constraint generation condition information (first information)
117 plan-creation-algorithm relationship model information (third information)
118 plan-creation-algorithm information (second information)
119 intensity-change-desired constraint information (fourth information)

## Claims

1. An timetable plan creation system comprising:
a storage device that stores
first information that contains information regarding a constraint and an intensity of the constraint,
the constraint being generated in each of timetable variables that constitute an timetable plan of a transport service,
second information that contains a creation algorithm for creating the timetable plan,
third information that contains information for associating a timetable variable of the timetable plan and a measure of an evaluation index of the timetable plan,
the timetable variable being one to be updated by the creation algorithm,
the evaluation index being one to be improved by executing the creation algorithm, and
fourth information that contains information on a desired change of the intensity of the constraint of the first information; and
a computing device that executes
a constraint generation process for generating a constraint with an intensity, based on the first information and the fourth information,
the constraint being one generated for each of the timetable variable of a to-be-created timetable plan,
an algorithm selection process for selecting a plan creation algorithm based on the third information,
the plan creation algorithm being one for improving a quality of the to-be-created timetable plan, and
a plan creation process for creating a new timetable plan by executing each of the plan creation algorithm that has been selected in the algorithm selection process,
in the executing, the constraint that has been generated in the constraint generation process being applied to each of the plan creation algorithm.

2. The timetable plan creation system according to claim 1, wherein
in the constraint generation process,
the computing device acquires information of the to-be-created timetable plan and of a creation date of the to-be-created timetable plan,
the computing device acquires information regarding a status of a mobile resource in the transport service and up to an execution date of the timetable plan,
the computing device specifies a condition that matches with the intensity and with the constraint indicated in the first information, by using the acquired timetable plan, the acquired creation date, and the information regarding the status of the mobile resource, and
the computing device stores, in the storage device, the condition as a change restriction constraint that serves as the first information regarding the timetable plan.

3. The timetable plan creation system according to claim 2, wherein
if the change restriction constraint that matches with the fourth information is present,
the computing device further executes a process for reflecting a desired change of the intensity included in the fourth information, to the change restriction constraint.

4. The timetable plan creation system according to claim 1, wherein
in the algorithm selection process,
the computing device acquires the to-be-created timetable plan and a current value of an evaluation index of the to-be-created timetable plan,
the computing device acquires a aim value relating to the evaluation index and a changeable variable,
the computing device calculates a relative distance that is to the aim value from the current value for each of the evaluation index, using the aim value and the current value of the evaluation index,
the computing device extracts the plan creation algorithm permitted by the changeable variable, based on the timetable variable included in the third information,
the computing device sets a score for each of the extracted plan creation algorithm, using the relative distance and information that is included in the third information and that is on an improvement effect, and
the computing device selects the plan creation algorithm that has a relatively higher score, as a to-be-currently-applied algorithm.

5. The timetable plan creation system according to claim 2, wherein
in the plan creation process,
the computing device acquires the to-be-created timetable plan and an update range,
the computing device acquires a change restriction constraint of the to-be-created timetable plan,
the computing device acquires a plan creation algorithm selected in the algorithm selection process,
the computing device executes the plan creation algorithm for the timetable variable that is within the update range of the to-be-created timetable plan, by employing the change restriction constraint as a constraint condition,
as a result of the executing, if a plan creation algorithm that does not yield an executable timetable plan is present,
the computing device re-executes the plan creation algorithm in a state of alleviating the intensity of the change restriction constraint,
regarding the timetable plan that has obtained by the re-executing, if an initial change restriction constraint that does not undergo the alleviating is not achieved based on an achievement status of the applied change restriction constraint,
the computing device stores the initial change restriction constraint as an intensity-change-desired constraint, and
the computing device stores the obtained timetable plan as a result timetable plan.

6. An timetable plan creation method, comprising:
causing the information processing system to have a storage device that stores
first information that contains information regarding a constraint and an intensity of the constraint,
the constraint being generated in each of timetable variables that constitute an timetable plan of a transport service,
second information that contains a creation algorithm for creating the timetable plan,
third information that contains information for associating a timetable variable of the timetable plan and a measure of an evaluation index of the timetable plan,
the timetable variable being one to be updated by the creation algorithm,
the evaluation index being one to be improved by executing the creation algorithm, and
fourth information that contains information on a desired change of the intensity of the constraint of the first information; and
causing the information processing system to execute:
a constraint generation process for generating a constraint with an intensity, based on the first information and the fourth information,
the constraint being one generated for each of the timetable variable of a to-be-created timetable plan,
an algorithm selection process for selecting a plan creation algorithm based on the third information,
the plan creation algorithm being one for improving a quality of the to-be-created timetable plan; and
a plan creation process for creating a new timetable plan by executing each of the plan creation algorithm that has been selected in the algorithm selection process,
in the executing, the constraint that has been generated in the constraint generation process being applied to each of the plan creation algorithm.

7. The timetable plan creation method according to claim 6, wherein
in the constraint generation process,
the information processing system acquires information of the to-be-created timetable plan and of a creation date of the to-be-created timetable plan,
the information processing system acquires information regarding a status of a mobile resource in the transport service and up to an execution date of the timetable plan,
the information processing system specifies a condition that matches with the intensity and with the constraint indicated in the first information, by using the acquired timetable plan, the acquired creation date, and the information regarding the status of the mobile resource, and
the information processing system stores, in the storage device, the condition as a change restriction constraint that serves as the first information regarding the timetable plan.

8. The timetable plan creation method according to claim 7, wherein
if the change restriction constraint that matches with the fourth information is present,
the information processing system further executes a process for reflecting a desired change of the intensity included in the fourth information, to the change restriction constraint.

9. The timetable plan creation method according to claim 6, wherein
in the algorithm selection process,
the information processing system acquires the to-be-created timetable plan and a current value of an evaluation index of the to-be-created timetable plan,
the information processing system acquires a aim value relating to the evaluation index and a changeable variable,
the information processing system calculates a relative distance that is to the aim value from the current value for each of the evaluation index, using the aim value and the current value of the evaluation index,
the information processing system extracts the plan creation algorithm permitted by the changeable variable, based on the timetable variable included in the third information,
the information processing system sets a score for each of the extracted plan creation algorithm, using the relative distance and information that is included in the third information and that is on an improvement effect, and
the information processing system selects the plan creation algorithm that has a relatively higher score, as a to-be-currently-applied algorithm.

10. The timetable plan creation method according to claim 7, wherein
in the plan creation process,
the information processing system acquires the to-be-created timetable plan and an update range,
the information processing system acquires a change restriction constraint of the to-be-created timetable plan,
the information processing system acquires a plan creation algorithm selected in the algorithm selection process,
the information processing system executes the plan creation algorithm for the timetable variable that is within the update range of the to-be-created timetable plan, by employing the change restriction constraint as a constraint condition,
as a result of the executing, if a plan creation algorithm that does not yield an executable timetable plan is present,
the information processing system re-executes the plan creation algorithm in a state of alleviating the intensity of the change restriction constraint,
regarding the timetable plan that has obtained by the re-executing, if an initial change restriction constraint that does not undergo the alleviating is not achieved based on an achievement status of the applied change restriction constraint,
the information processing system stores the initial change restriction constraint as an intensity-change-desired constraint, and
the information processing system stores the obtained timetable plan as a result timetable plan.

11. An timetable plan creation program causing an information processing system to execute a step,
the information processing system having a storage device that stores
first information that contains information regarding a constraint and an intensity of the constraint,
the constraint being generated in each of timetable variables that constitute an timetable plan of a transport service,
second information that contains a creation algorithm for creating the timetable plan,
third information that contains information for associating a timetable variable of the timetable plan and a measure of an evaluation index of the timetable plan,
the timetable variable being one to be updated by the creation algorithm,
the evaluation index being one to be improved by executing the creation algorithm, and
fourth information that contains information on a desired change of the intensity of the constraint of the first information, and
the information processing system being caused to execute:
a constraint generation process for generating a constraint with an intensity, based on the first information and the fourth information,
the constraint being one generated for each of the timetable variable of a to-be-created timetable plan,
an algorithm selection process for selecting a plan creation algorithm based on the third information,
the plan creation algorithm being one for improving a quality of the to-be-created timetable plan; and
a plan creation process for creating a new timetable plan by executing each of the plan creation algorithm that has been selected in the algorithm selection process,
in the executing, the constraint that has been generated in the constraint generation process being applied to each of the plan creation algorithm.

12. A transportation plan system comprising:
an timetable plan creation system including
a storage device that stores
first information that contains information regarding a constraint and an intensity of the constraint,
the constraint being generated in each of timetable variables that constitute an timetable plan of a transport service,
second information that contains a creation algorithm for creating the timetable plan,
third information that contains information for associating a timetable variable of the timetable plan and a measure of an evaluation index of the timetable plan,
the timetable variable being one to be updated by the creation algorithm,
the evaluation index being one to be improved by executing the creation algorithm, and
fourth information that contains information on a desired change of the intensity of the constraint of the first information, and
a computing device that executes
a constraint generation process for generating a constraint with an intensity, based on the first information and the fourth information,
the constraint being one generated for each of the timetable variable of a to-be-created timetable plan,
an algorithm selection process for selecting a plan creation algorithm based on the third information,
the plan creation algorithm being one for improving a quality of the to-be-created timetable plan, and
a plan creation process for creating a new timetable plan by executing each of the plan creation algorithm that has been selected in the algorithm selection process,
in the executing, the constraint that has been generated in the constraint generation process being applied to each of the plan creation algorithm;
a traffic control system
that acquires the timetable plan from the timetable plan creation system, and
that controls an operation of a mobile resource in the transport service, based on the timetable plan; and
a resource management system
that acquires the timetable plan and the fourth information from the timetable plan creation system, and
that performs management of the mobile resource in the transport service, based on the timetable plan and the fourth information.
